# EUROPÄISCHE PATENTSCHRIFT

(11) **EP 1 588 156 B1**
(45) Veröffentlichungstag und Bekanntmachung des Hinweises auf die Patenterteilung: **01.08.2007**
(21) Anmeldenummer: 04701891.6
(22) Anmeldetag: 14.01.2004
(51) Int. Cl.: G01N 30/20, G01N 30/60, F15C 5/00

(54) **MINIATURISIERTER GASCHROMATOGRAPH UND INJEKTOR HIERFÜR**
MINIATURISED GAS CHROMATOGRAPH AND INJECTOR FOR THE SAME
CHROMATOGRAPHE EN PHASE GAZEUSE MINIATURISE ET INJECTEUR CORRESPONDANT

(30) Priorität: 16.01.2003 DE 10301601
(43) Veröffentlichungstag der Anmeldung: 26.10.2005
(73) Patentinhaber: SLS Micro Technology GmbH, 21079 Hamburg (DE)
(72) Erfinder: SCHMIDT, Tobias, 23847 Steinhorst (DE); MAHNKE, Mathias, 21514 Güster (DE); LEHMANN, Uwe, 22587 Hamburg (DE)
(74) Vertreter: Eisenführ, Speiser & Partner
(86) Internationale Anmeldenummer: PCT/DE2004/000035
(87) Internationale Veröffentlichungsnummer: WO 2004/065955

(56) Entgegenhaltungen:
- US-A- 4 493 476
- US-A- 5 178 190
- US-A- 5 909 078
- US-A1- 2002 176 804

## Beschreibung

Die Erfindung betrifft einen miniaturisierten Gaschromatographen und einen Injektor hierfür.

Seit vielen Jahren gibt es Bestrebungen, Analysesysteme zu miniaturisieren, um sie leichter handhaben, vielseitiger einsetzen und kostengünstiger herstellen zu können. So wurde bereits 1979 von S.C. Terry et al. (IEEE Transactions on Electron Devices 26, 1880-1886) ein Miniatur-Gaschromatograph beschrieben, der auf einer Siliziumscheibe realisiert wurde.

Bei bisherigen miniaturisierten Analysesysteme mangelt es im Vergleich zu entsprechenden.Geräten üblicher Baugröße aber vielfach an der erforderlichen Genauigkeit und Reproduzierbarkeit der Analysenergebnisse. Dieser Mangel beruht vor allem darauf, daß es bisher an einem wirklich integrierten System fehlt, bei dem alle wesentlichen Komponenten, wie beispielsweise das Injektionssystem, die Trennsäule und der Detektor, in Mikrosystem- bzw. MEMS-Technik (MEMS = microelectro-mechanical systems) hergestellt und an die besonderen Erfordernisse im Mikro-Bereich angepaßt sind. Hier ist insbesondere die Vermeidung von Totvolumen wichtig. Darüber hinaus ist aber auch ein möglichst niedriger Energiebedarf erforderlich, um die Herstellung von Handgeräten zu ermöglichen, die beispielsweise im Falle eines Giftgasalarms unmittelbar vor Ort sinnvoll eingesetzt werden können.

Ein miniaturisierter Gaschromatograph ist beispielsweise aus der DE 19726000 bekannt. Dieser Mikro-Gaschromatograph sieht eine in Mikrosystemtechnik hergestellte Trennsäule mit einem darin integrierten Wärmeleitfähigkeitsdetektor (WLD) vor, wobei die Trennsäule eine stationäre Phase aufweist, die durch Plasmapolymerisation organischer Monomere im ganzen Grabenumfang aufgebracht ist. Mit Hilfe dieser Trennsäule sind reproduzierbare Analysenergebnisse erhältlich. Der Gaschromatograph gemäß der DE 19726000 sieht allerdings ein Injektionssystem mit miniaturisierten Kugelventilen vor, wie es beispielsweise von Lehmann et al. (2000, Micro Total Analysis Systems 2000, 167-170) vorgeschlagen worden ist. Bei einem solchen Injektionssystem können jedoch Totvolumen auftreten, so daß auch bei dem in der DE 19726000 beschriebenen Gaschromatographen eine Beeinträchtigung des Meßergebnisses nicht auszuschließen ist.

Andere Miniatur-Gaschromatographen sehen Injektionssysteme vor, bei denen Membranventile Verwendung finden. Solche System sind beispielsweise von Terry et al. (1997, IEEE Transactions on Electron Devices 26, 1880-1886), J. B. Angell et al. (1983, Scientific American 248, 44-55) sowie in der WO 96/27792, WO 90/06470 und EP 0512521 beschrieben worden. Auch bei diesen Gaschromatographen treten häufig Probleme auf, da die verwendeten Injektionssysteme vergleichsweise große Totvolumen aufweisen können. Darüber hinaus sind die beschriebenen Systeme relativ komplex, schwer herstellbar und vergleichsweise teuer.

Aufgabe der vorliegenden Erfindung ist es, ein Analysesystem zur Verfügung zu stellen, das kompakt sowie einfach und kostengünstig in der Herstellung ist und bei dem Totvolumen weitgehend vermieden werden, um zuverlässige und reproduzierbare Meßergebnisse erhalten zu können. Insbesondere soll ein Injektionssystem zur Verfügung gestellt werden, daß vergleichsweise einfach in MEMS-Technik herstellbar ist und ein zuverlässiges und reproduzierbares Aufbringen einer definierten Probenmenge auf die Trennsäule eines Miniaturgaschromatographen erlaubt.

Die Lösung der Aufgabe erfolgt durch den Gegenstand des Anspruchs 1.

Der erfindungsgemäße miniaturisierte Gaschromatograph weist mindestens einen Injektor, eine Trennsäule und einen Detektor auf, die auf einer Platine zu einem Gaschromatographie-Modul zusammengefaßt sind. Der Injektor weist eine erste Platte mit Kanälen auf, die einer zweiten Platte mit Kanälen zugeordnet und relativ zu dieser verschiebbar ist, wobei mindestens eine der Platten auf der der anderen Platte zugewandten Seite mit einer Schicht aus einem Kunststoff, insbesondere einem chemisch inerten Kunststoff, versehen ist.

Unter Kunststoff im Sinne der vorliegenden Erfindung wird jedes Material verstanden, dessen wesentliche Bestandteile aus solchen makromolekularen organischen Verbindungen bestehen, die synthetisch oder durch Abwandeln von Naturprodukten entstehen (s. Römpp Chemie Lexikon, 9. Aufl., S. 2398).

Bei dem erfindungsgemäßen Gaschromatographen sind die GC-Bestandteile Injektor, Trennsäule und Detektor auf einer Platine in Form eines Moduls zusammengefaßt. Durch diese kompakte Bauweise können Totvolumen gezielt vermieden werden. Die Komponenten sind dabei bevorzugt in MEMS-Technik gefertigt. Als Platine kommen beispielsweise Leiterplatten, wie sie für Computer verwendet werden, in Betracht. Diese sollten aber den auftretenden vergleichsweise hohen Temperaturen Stand halten können. Bei dem Injektor ist eine Art Schieberventil in Mikrosystemtechnik realisiert, mit dessen Hilfe ein definiertes Volumen einer flüssigen oder gasförmigen Probe zuverlässig und reproduzierbar auf die nachgeschaltete Trennsäule aufgebracht werden kann.

Das Prinzip solcher Schieberventile ist grundsätzlich bekannt und beispielsweise in der DE 1167564, DE 1190697, DE 1673157 und EP 0225779 auch für Gaschromatographen beschrieben. Bei solchen Schieberventilen können Dichtigkeitsprobleme auftreten. In der "klassischen" Gaschromatographie werden sie dennoch häufig eingesetzt, weil auftretende Undichtigkeiten hier keinen entscheidenden Einfluß auf die Systemleistung haben. Für einen Gaschromatographen in Mikrosystemtechnik sind die dort beschriebenen Ventile aber nicht geeignet.

In der DE 10125123 ist ein miniaturisiertes chemisches Labor mit einer Vielzahl von Reaktoren und diesen zugeordneten Chromatographen beschrieben, bei dem Proben aus den Reaktoren durch ein Schieberventil auf die Trennsäulen der Chromatographen aufgegeben werden. Auch dieses Schieberventil ist nicht in Mikrosystemtechnik gefertigt und weist daher entscheidende Nachteile auf. Insbesondere ist das verwendete Edelstahl vergleichsweise schwer. Der in der DE 10125123 nicht weiter beschriebene Motor für die Betätigung des Injektors 1 dürfte daher aufgrund der benötigten Antriebskraft einen vergleichsweise hohen Energiebedarf aufweisen. Für die Herstellung von Mikrosystemen ist Edelstahl als Material ohnehin schlechter geeignet als beispielsweise Silizium. Auch bei dem Ventil gemäß der DE 10125123 dürften Dichtigkeitsprobleme kaum zu vermeiden sein, wenn beispielsweise Probenkomponenten sich zwischen den Kanal-Platten ablagern.

Der erfindungsgemäße Gaschromatograph weist dagegen einen Injektor auf, der konsequent in Mikrosystemtechnik gefertigt ist und daher mit geringer Antriebskraft und folglich geringem Energiebedarf betrieben werden kann. Durch das Versehen wenigstens einer der beiden Platten mit einer Schicht aus einem bevorzugt chemisch inerten Kunststoff ist die Dichtigkeit des Systems auch bei hohen Drücken zu gewährleisten. Der Kunststoff ist wesentlich flexibler als beispielsweise Edelstahl und dichtet auch noch dann ab, wenn etwa kleine Probenpartikel zwischen die Platten geraten sollten. Vorteilhaft sind die einander zugewandten Flächen der beiden Platten, also die Flächen, die bei Betätigung des Injektors aneinander vorbeigleiten, mit dem Kunststoff beschichtet.

Bevorzugt ist die Schicht durch Plasmapolymerisation organischer Monomere aufgebracht, wobei als Ausgangsverbindungen beispielsweise Difluormethan, Hexafluorbutadien und/oder Octafluorcyclobutan verwendet werden können. Bei der Plasmapolymerisation werden gasförmige Monomere, die durch ein Plasma angeregt werden, als hochvernetzte Schichten auf ein Substrat niedergeschlagen. Struktur und Vernetzungsgrad können durch Variation von Prozeßparametern wie Druck, Gasfluß und Energiezufuhr gesteuert werden. Mit Hilfe der Plasmapolymerisation ergeben sich bei Verwendung der obigen Ausgangsmonomere besonders dichte, chemisch, mechanisch und thermisch stabile Schichten. Besonders bevorzugt ist die Kunststoffschicht eine PTFE(Polytetrafluorethylen)-artige, antihaftende, chemisch inerte Schicht. Probenpartikel bleiben an einer solchen Beschichtung nicht haften und können daher nicht zu einer Undichtigkeit des Injektors führen. Auch für den Fall, daß doch ein Partikel zwischen die Platten geraten und dort haftenbleiben sollte, führt dies, anders als bei Edelstahl, in der Regel nicht zu Undichtigkeiten, da der Kunststoff vergleichsweise flexibel ist und das Partikel zu umschließen vermag. Darüber hinaus ist eine solche Schicht dauerwärmebeständig, so daß ein dauerhafter Betrieb bei beispielsweise 260 °C möglich ist.

Die Platten, die das Schieberventil bilden, sind bevorzugt aus Silizium. Dies ermöglicht eine Fertigung mit den bekannten Standardtechniken der Mikrosystemtechnik, beispielsweise die Ätzung (KOH-Ätzung, chemisch-physikalische Plasmaätzung) der sehr feinen Kanäle in die Platten. Dadurch können auch Totvolumen sehr klein gehalten werden.

Bevorzugt weist der Kunststoff einen niedrigeren Haftreibungskoeffizienten auf als Silizium. Der Haftreibungskoeffizient µₕ von Silizium auf Silizium (Si-Si) beträgt beispielsweise etwa 0,2. Demgegenüber liegt der Haftreibungskoeffizient µₕ von PTFE auf PTFE (PTFE-PTFE) mit etwa 0,04 sehr viel niedriger. Durch die Beschichtung beider Platten mit einer PTFE-artigen Kunststoffschicht ergibt sich eine niedrigere Haftreibung als bei unbeschichteten Siliziumplatten oder bei Beschichtung nur einer Platte mit der Kunststoffschicht. Dies ist insbesondere vorteilhaft, um den Energieaufwand möglichst niedrig zu halten, der für das Aneinandervorbeigleiten der Platten bei Betätigung des Injektors aufzubringen ist. Obwohl die Platten aufeinandergepreßt werden, um das System dicht zu halten, wird es damit möglich, einen Ventilantrieb einzusetzen, der eine vergleichsweise geringe Antriebskraft aufweist. So kann beispielsweise eine Antriebskraft von etwa 0,2 N ausreichen, um den Injektor des erfindungsgemäßen Gaschromatographen zu betätigen. Ein entsprechender elektromechanischer Antrieb, der ebenfalls in Mikrosystemtechnik gefertigt sein kann, ist beispielsweise ein Linearmotor oder ein Elektromagnet in Form eines bistabilen Magnetsystems.

In einer bevorzugten Ausführungsform ist auf der Platine zusätzlich eine elektronische Steuerungs- und Auswerteeinheit vorgesehen. Auf diese Weise ist in das.GC-Modul auch die Steuerungs- und Auswertungselektronik integriert. Die Steuerungselektronik kann beispielsweise die Temperatur einer möglichen Injektor- und/oder Trennsäulen- und/oder Detektorheizung steuern. Darüber hinaus kann sie auch die Schaltung des Injektors steuern. Die Integration einer Auswerteeinheit in das GC-Modul ermöglicht es, mit dem Miniaturgaschromatographen eine Ergebnis-Auswertung vor Ort vorzunehmen. Die Auswerteeinheit kann beispielsweise einen Ergebnisspeicher umfassen, in dem Messungen zwischengespeichert werden können. Sie kann zudem eine Datenbank mit Kenndaten (z.B. Retentionszeiten) von zu messenden Substanzen umfassen, so daß durch Vergleich zwischen den Meßdaten und den Kenndaten aus der Datenbank eine Identifikation von Probenkomponenten bereits vor Ort erfolgen kann.

In einer weiteren bevorzugten Ausgestaltung der Erfindung sind der Injektor und/oder die Trennsäule und/oder der Detektor mit Hilfe von Heizelementen temperierbar. Dies geschieht häufig, um beispielsweise flüssige Proben bei geeigneter Temperatur in die Gasphase zu überführen und so ihre Untersuchung mit einem Gaschromatographen zu ermöglichen. Bei den Heizelementen kann es sich um in Dickschichttechnologie gefertigte Heizelemente auf Keramiksubstraten handeln. Um die auf der Platine untergebrachte Steuerungs- und Auswerteeinheit vor der Wärmeabstrahlung der Heizelemente zu schützen, sind Ausnehmungen in der Platine vorgesehen. Dies können einfache Gräben sein, die in die Platinenoberfläche eingebracht sind. Es hat sich überraschend herausgestellt, daß diese einfache Maßnahme ausreicht, um den Wärmefluß von den Heizelementen zu der Platinenelektronik zu behindern. Andere Maßnahmen, wie etwa das Aufbringen einer Wärmebarriere in Form einer Schicht aus wärmedämmendem Material, werden dadurch überflüssig. Die elektronischen Bausteine bleiben in einem Temperaturbereich, bei dem eine zuverlässige Funktion gewährleistet ist.

Bei einer besonders bevorzugten Ausführungsform der Erfindung ist die Platte, gegenüber der die andere Platte verschoben wird, von einer Glasplatte, bevorzugt einer Borosilikatglasplatte, abgedeckt. Auf diese Weise ist es besonders einfach, die erforderlichen Kanäle herzustellen. In die Siliziumplatte werden dabei Kanäle in Form von offenen Gräben in die Oberfläche geätzt. Mit Hilfe der Glasscheibe, die beispielsweise durch anodische Bondung direkt auf die Siliziumscheibe aufgebracht werden kann, werden die Gräben abgedeckt. Durch Einbringen von entsprechenden Gräben in die Oberfläche der Glasscheibe, beispielsweise durch lithographische Ätzverfahren oder Bohrungen, werden röhrenförmige Kanäle gebildet, in die Kapillaren eingeführt werden können, um die Anbindung an den Trägergas- und/oder Probengasstrom zu bewerkstelligen. Die Verwendung des chemisch sehr beständigen Borosilikatglases hat darüber hinaus den Vorteil, daß die Kanäle einsehbar sind, so daß mögliche Ablagerungen auch optisch erkennbar sind.

Die erste Platte weist mindestens drei Kanäle, die zweite Platte mindestens zwei zuführende Kanäle und zwei abführende Kanäle auf. Es ist aber auch möglich, weitere Kanäle vorzusehen, um beispielsweise einen zweiten Probengaskanal oder einen Referenzgaskanal zu realisieren. In der Regel wird dabei diejenige Platte, die relativ zu der anderen Platte bewegt wird, mindestens einen Kanal mehr aufweisen als die andere Platte zu- oder abführende Kanäle aufweist.

In einer weiteren bevorzugten Ausführungsform sind in der Platine Ausnehmungen, beispielsweise Gräben, vorgesehen, in die Kapillaren, bevorzugt Glaskapillaren, zur Gasführung versenkt sind. Ein Verlegen von Gasführungsleitungen auf der Oberfläche der Platine kann so vermieden werden. Ein Abreißen von Gasleitungen, etwa beim Handling des GC-Moduls, wird auf diese Weise wirksam verhindert. Darüber hinaus wird dadurch auch eine mögliche Temperierung der Gasleitungen wesentlich erleichtert. Entsprechende Heizelemente können auf einfache Weise mit in die Ausnehmungen verlegt werden.

In einer weiteren bevorzugten Ausführungsform ist dem Detektor, der besonders bevorzugt ein Wärmeleitfähigkeitsdetektor ist, ein Gasflußsensor zugeordnet. Beispielsweise kann der Gasflußsensor dem Detektor in Flußrichtung des Gases durch die Trennsäule vorgeschaltet sein. Eine solche Anordnung ermöglicht es, auf einfache Weise eine Basislinienkorrektur vorzunehmen, indem hierfür das Signal des Flußsensors mit dem des Detektors in geeigneter Weise verrechnet wird.

Die vorliegende Erfindung betrifft auch einen Injektor, insbesondere für einen miniaturisierten Gaschromatographen, der eine erste Platte mit Kanälen aufweist, die einer zweiten Platte mit Kanälen zugeordnet und relativ zu dieser verschiebbar ist, wobei mindestens eine der Platten auf der der anderen Platte zugewandten Seite mit einer Schicht aus einem Kunststoff versehen ist. Bevorzugt ist der Kunststoff chemisch inert, um eine Wechselwirkung mit Probenkomponenten weitgehend auszuschließen.

Der Injektor ist in Mikrosystemtechnik gefertigt und für Mikrosysteme geeignet, bei denen Flüssigkeits- oder Gasströme gefördert werden, und bei denen ein definiertes Flüssigkeits- oder Gasvolumen in einen Flüssigkeits- oder Gasstrom eingebracht werden soll. Beispielsweise eignet sich der Injektor für den Einsatz in einem Gaschromatographen. Auch für andere Chromatographen, beispielsweise Flüssigchromatographen, ist der Injektor vorteilhaft einsetzbar.

Bevorzugt ist die Schicht des Kunststoffs durch Plasmapolymerisation organischer Monomere aufgebracht, wobei organische Monomere wie beispielsweise Difluormethan, Hexafluorbutadien und/oder Octafluorcyclobutan als Ausgangsverbindungen in Frage kommen. Damit ergibt sich eine besonders dichte und beständige Schicht, so daß der Injektor besonders vielseitig einsetzbar ist. So ist ein dauerhafter Einsatz unter hohem Druck und hoher Temperatur bei geringem Verschleiß und hoher Dichtigkeit möglich. Zudem weist diese Schicht mit ihrer entsprechenden Oberflächenenergie eine geringe Wechselwirkung mit Reagenzien auf.

Um eine leichte Betätigung des Injektors zu ermöglichen, ist es vorteilhaft, wenn der Kunststoff einen niedrigeren Haftreibungskoeffizienten als Silizium aufweist. Dadurch wird es möglich, als Material für die Platten Silizium zu verwenden, ohne eine hohe Antriebskraft für die Ventilbetätigung aufwenden zu müssen. Dadurch kann auch der Antrieb für die Betätigung des Injektors, d.h. für das Verschieben der ersten gegenüber der zweiten Platte, so dimensioniert werden, daß der Einsatz eines in Mikrosystemtechnik gefertigten elektromechanischen Antriebs möglich und sinnvoll wird. So kann beispielsweise ein Linearmotor oder ein bistabiles Magnetsystem verwendet werden.

Die Erfindung wird im folgenden anhand der Figuren 1 bis 7 näher erläutert. Es zeigt:
Fig. 1 Draufsicht auf eine Ausführungsform eines GC-Moduls eines erfindungsgemäßen Miniatur-Gaschromatographen.
Fig. 2 Draufsicht auf eine weitere Ausführungsform eines GC-Moduls eines erfindungsgemäßen Miniatur-Gaschromatographen.
Fig. 3 Räumliche Skizze einer Ausführungsform eines Injektors.
Fig. 4 Schnitt durch den Injektor gemäß Fig. 3 entlang der 20 Probengas- oder Trägergasleitung.
Fig. 5 Draufsicht auf einen Injektor gemäß Fig. 3 mit einer schematischen Darstellung der Funktionsweise des injektors. Links: Erste Stellung (Ruhestellung) des Injektors. Rechts: Stellung des Injektors nach Betätigung. Die Pfeile deuten den Proben- bzw. Trägergasstrom an.
Fig. 6 Explosionszeichnung eines Linearmotors.
Fig. 7 Explosionszeichnung eines bistabilen Magnetsystems.

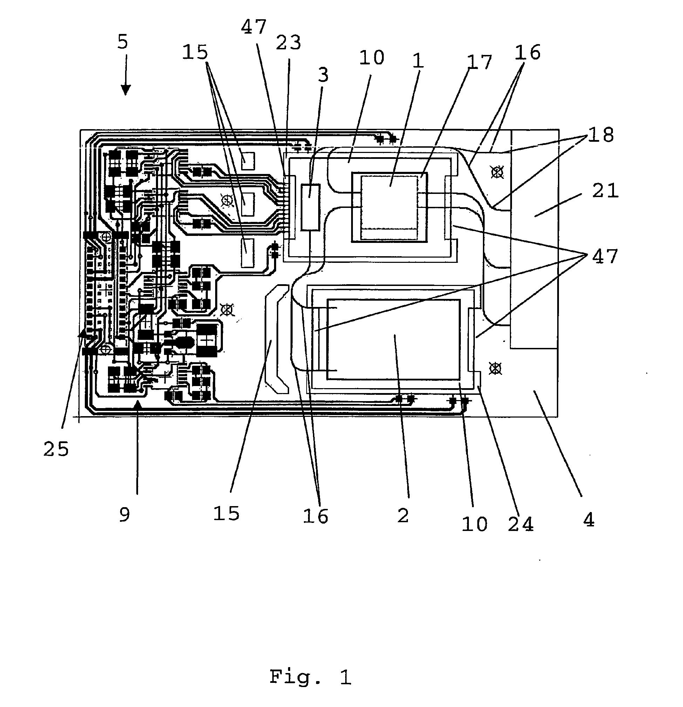

In Fig. 1 ist ein GC-Modul 5 für den erfindungsgemäßen Gaschromatographen dargestellt. Das GC-Modul umfaßt eine Platine 4. Es handelt sich hier bevorzugt um eine Leiterplatte, die für die auftretenden hohen Temperaturen geeignet ist. Solche Leiterplatten sind im Fachhandel erhältlich. In der Platine 4 sind Ausnehmungen 23, 24 vorgesehen, in denen der Injektor 1 mit dem elektromechanischen Antrieb 17, hier einem Linearmotor, der Detektor 3, der beispielsweise ein Wärmeleitfähigkeitsdetektor ist, sowie die Trennsäule 2 untergebracht sind. Für die Trennsäule 2, den Injektor 1 und den Detektor 3 ist eine Heizung in Form von Heizelementen 10, die hier Keramikplatten mit Heizelementen in Dickschichttechnologie sind, vorgesehen. Die Heizelemente 10 sind ebenfalls in den Ausnehmungen 23, 24 untergebracht, wobei die Heizelemente 10 auf von der Platine 4 gebildeten Auflageflächen 47 aufliegen. Die Fläche, mit der die Heizelemente 10 auf den Auflageflächen 47 aufliegen, ist dabei möglichst klein, um die Wärmeübertragung auf die Platine zu vermindern. Der Injektor kann somit beispielsweise auf 100 °C, die Trennsäule auf 200 °C temperiert werden. Bei der dargestellten Ausführungsform ist eine gemeinsame Heizung für den Injektor 1 und den Detektor 3 vorgesehen. Der Detektor kann aber gegebenenfalls auch eine eigene Heizung erhalten. Es ist im übrigen auch möglich, mehrere Detektoren 3 vorzusehen, die gemeinsam oder getrennt geheizt werden können. Ebenso können auch mehrere Säulen auf einer Platine vorgesehen sein. Auf der Platine 4 ist auch die elektronische Steuerungs- und Auswerteeinheit 9 untergebracht. Mit Hilfe dieser elektronischen Steuerungs- und Auswerteeinheit 9 werden beispielsweise die Heizungselemente 10 angesteuert, die Temperatur des Injektors 1 und der Trennsäule 2, gegebenenfalls auch des Detektors 3, gemessen, und die vom Detektor 3 gelieferten Meßwerte erfaßt, gespeichert und gegebenenfalls ausgewertet. Mit Hilfe einer Schnittstelle 25 können die Daten beispielsweise an eine integrierte Ausgabeeinheit, beispielsweise einen Bildschirm, oder auch ein externes Gerät, etwa einen PC oder Drucker, weitergegeben werden. Um die hitzeempfindliche Elektronik auf der Platine vor der Wärmeabstrahlung der Heizelemente 10 zu schützen, sind Ausnehmungen 15 in der Platine 4 vorgesehen. Diese sorgen dafür, daß eine Übertragung der Wärme, etwa durch Konvektion, auf den Bereich der Platine 4, in dem sich die elektronische Steuerungs- und Auswerteeinheit 9 befindet, wirksam verhindert wird. Untersuchungen haben gezeigt, daß auf andere mögliche Maßnahmen, etwa das Aufbringen einer Schicht wärmedämmenden Materials als Wärmebarriere, auf diese Weise verzichtet werden kann. Die Elektronik bleibt auch bei dauerhaftem Betrieb und bei Unterbringung des GC-Moduls 5 in ein entsprechendes Gehäuse, in einem Temperaturbereich, in dem ein zuverlässiges Funktionieren gewährleistet ist. Die Gaszu- und - abführungen sind in Form von Kapillaren 18, insbesondere Glaskapillaren, realisiert, die in Ausnehmungen 16 in der Platine 4 untergebracht sind. Die Kapillaren 18 beginnen bzw. enden in einem Gasverteilerblock 21, über den beispielsweise das Trägergas und die Probe zu- und abgeführt werden können. Die Steuerungs- und Auswerteeinheit 9 kann auch auf einer separaten Platine untergebracht sein.

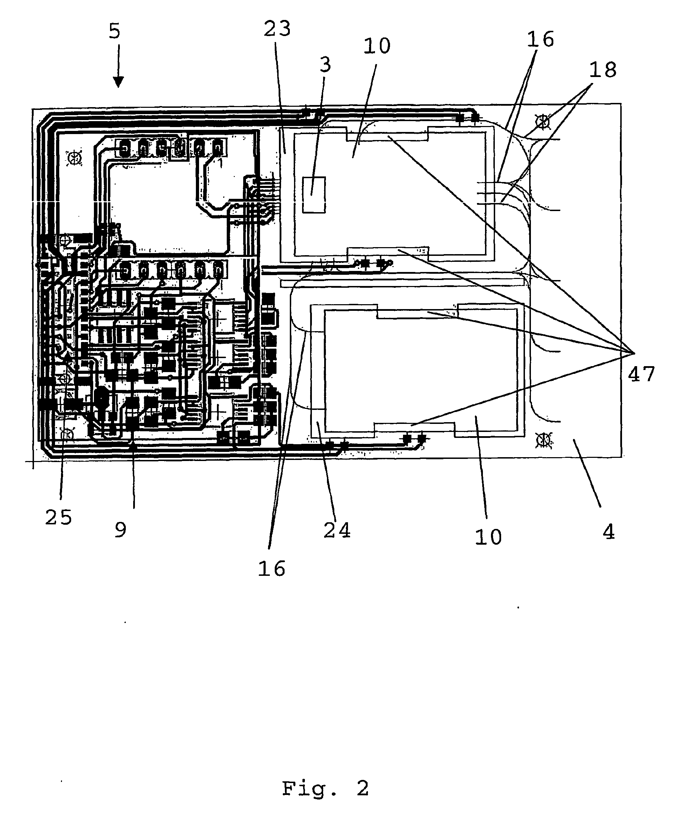

Fig. 2 zeigt eine weitere Ausführungsform eines GC-Moduls 5 für den erfindungsgemäßen Gaschromatographen in einer vereinfachten Darstellung. Hierbei sind die Auflageflächen 47 gegenüber der in Fig. 1 gezeigten Ausführungsform so angeordnet, daß der von den Heizelementen 10 über die Auflageflächen 47 geleitete Wärmefluß von der Steuerungs- und Auswerteeinheit 9 wegführt. Hierzu sind die Auflageflächen 47 um 90° versetzt angeordnet worden, so daß zur Steuerungs- und Auswerteeinheit 9 hin keine Auflagefläche 47 für die Heizelemente 10 vorhanden ist. Darüber hinaus bilden auf diese Weise die Ausnehmungen 23, 24 eine Wärmebarriere zur Steuerungs- und Auswerteeinheit 9 hin, wie dies oben für die Ausnehmungen 15 beschrieben wurde. Bei ausreichender Beabstandung der Heizelemente 10 von dem von der Platine 4 um die Ausnehmungen 23, 24 herum gebildeten Rand zur Steuerungs- und Auswerteeinheit 9 hin ist die Wärmeübertragung wirksam vermindert, so daß eine Beeinträchtigung der Funktion der elektronischen Bauteile nicht zu befürchten ist. Bei dieser Ausführungsform ist es daher auch möglich, auf Ausnehmungen 15 zu verzichten.

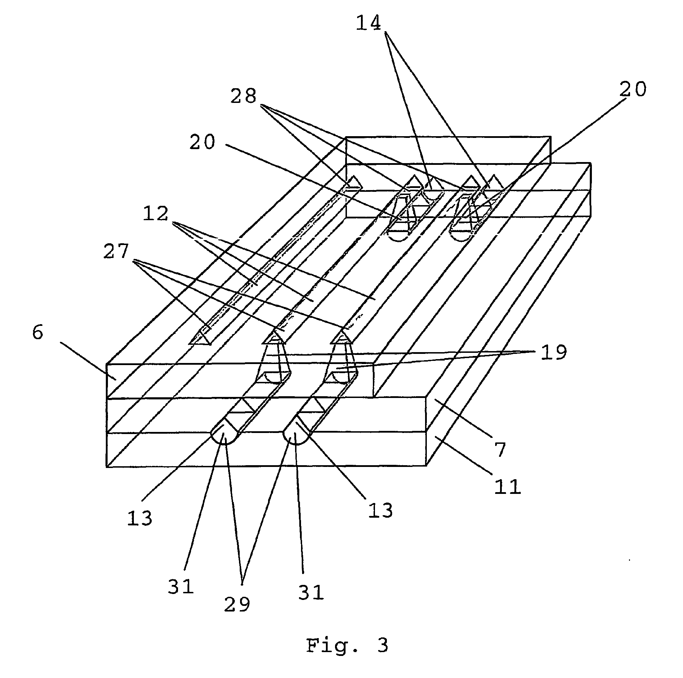

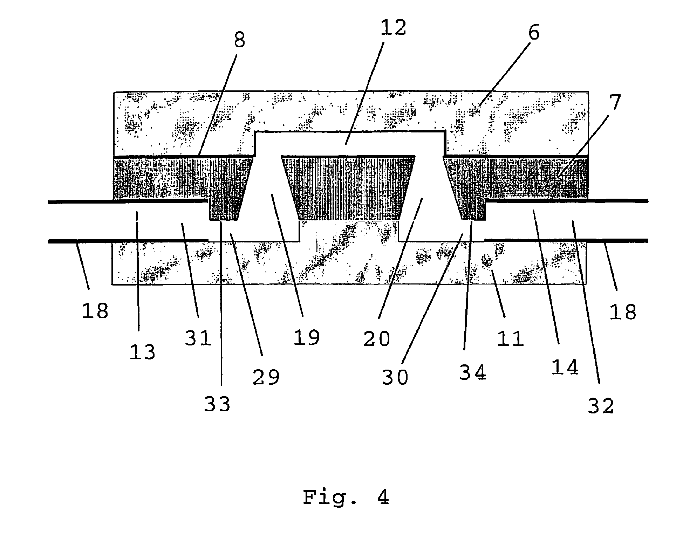

In Fig. 3 ist eine Ausführungsform eines Injektors 1 für einen erfindungsgemäßen Gaschromatographen dargestellt. Der Injektor 1 umfaßt im wesentlichen eine Platte 7, eine Platte 6 und eine Abdeckplatte 11. Die Platten 6 und 7 sind dabei bevorzugt aus Silizium. Die Platte 6 weist im Vergleich zu Platte 7 eine etwas geringere Breite auf. Die Platten 6 und 7 sind an den Flächen, mit denen sie aufeinanderliegen, mit einer Schicht 8 eines inerten, PTFE-artigen Kunststoffs beschichtet, wobei die Beschichtung durch Plasmapolymerisation organischer Monomere, beispielsweise Difluormethan, Hexafluorbutadien und/oder Octafluorcyclobutan, aufgebracht ist. Die Beschichtung sorgt nicht nur für eine ausreichende Dichtigkeit des Injektors 1, sondern auch dafür, daß die Platten 6, 7 bei Betätigung des Injektors 1 aneinander vorbeigleiten können, ohne daß hierzu ein großer Energieaufwand nötig ist. Auf diese Weise kann ein Linearmotor 17 eingesetzt werden, der eine Antriebskraft von etwa 0,2 bis 1 N aufbringt. In eine Oberfläche der Platte 6 sind durch dem Fachmann auf dem Gebiet der Mikrosystemtechnik bekannte Methoden drei Kanäle 12 in Form von Gräben strukturiert. Die Gräben sind zur einen Seite der Platte 6 hin offen. Durch das verwendete Ätzverfahren sind die Kanäle im Querschnitt im wesentlichen dreieckförmig, können aber auch jede andere, beispielsweise eine im wesentlichen runde Form haben. Die Kanäle 12 enden innerhalb der Platte 6 und führen somit nicht bis zu den Rändern der Platte 6. In die Oberfläche der Platte 7 sind Kanäle 13, 14 mit Hilfe von Ätzverfahren strukturiert. Anders als bei der Platte 6 beginnen die Kanäle 13, 14 aber am Rand der Platte 7 und reichen von hier aus ein Stück in die Platte 7 hinein. Darüber hinaus sind in die Platte 7 Durchbrechungen 19, 20 geätzt, die von der der Platte 6 zugewandten Seite der Platte 7 zu der der Abdeckplatte 11 zugewandten Seite der Platte 7 führen. Durch die verwendete Ätzmethode resultiert hier eine pyramidenförmige Ausgestaltung der Durchbrechungen 19, 20, so daß sich ein im wesentlichen quadratischer Querschnitt ergibt, der sich zu der der Platte 6 zugewandten Seite der Platte 7 hin verkleinert. Andere Ausgestaltungen der Durchbrechungen 19, 20 sind aber ohne weiteres möglich. Die Kanäle 13, 14 liegen einander an den Enden der Platte 7 gegenüber. Die Durchbrechungen 19, 20 liegen auf der durch Verbindung der Mittelachsen der Kanäle 13, 14 gebildeten Linie. Die Platte 6 ist so der Platte 7 zugeordnet, daß die Endbereiche 27, 28 der Kanäle 12 jeweils den von den Durchbrechungen 19, 20 in der Platte 7 gebildeten Öffnungen gegenüber liegen. Die Abdeckplatte 11 ist bevorzugt aus Borosilikatglas und mit der Platte 7 beispielsweise durch anodische Bondung fest verbunden. In die Oberfläche der Abdeckplatte 11 sind grabenartige Kanäle 29, 30, beispielsweise in Form einer halbkreisförmigen Bohrung oder lithographischen Ätzung, eingebracht, die am Rand der Abdeckplatte 11 beginnen und ein Stück in die Abdeckplatte 11 hineinragen. Die Platte 7 und die Abdeckplatte 11 werden so einander zugeordnet, daß die Kanäle 13, 14 und die Kanäle 29, 30 einander gegenüberliegen und Kanäle 31, 32 bilden (s. Fig. 4). Wie insbesondere aus Fig. 4 ersichtlich ist, sind die Kanäle 29, 30 in der Abdeckplatte 11 länger als die Kanäle 13, 14 in der Platte 7 und ragen somit weiter in das Innere des Injektors 1 vor. Die Durchbrechungen 19, 20 sind darüber hinaus etwas ins Innere der Platte 7 versetzt angeordnet, so daß Vorsprünge 33, 34 gebildet sind, die einen Anschlag für in die Kanäle 31, 32 eingeführte Kapillaren 18 bilden können. Das Gas, beispielsweise ein Trägergas, strömt somit z.B. über die Kapillare 18 in den Kanal 31 und den Kanal 29. Über die Durchbrechung 19 gelangt das Gas in den Kanal 12 in der Platte 6. Durch die Durchbrechung 20 strömt das Gas in den Kanal 30, von dort in den Kanal 32 und in die Kapillare 18 auf der anderen Seite des Injektors 1.

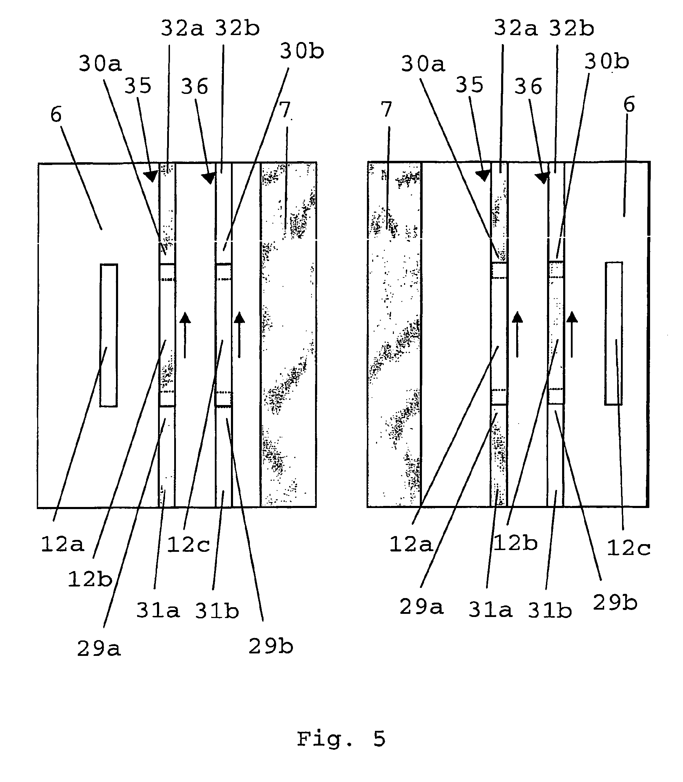

Aus Fig. 5 ist die Funktionsweise des Injektors 1 ersichtlich. In der ersten Stellung (Ruhestellung, Fig. 5 links) liegen die Platten 6, 7 so aufeinander, daß die Kanäle 31 a, 32 a über die Kanäle 29 a, 30 a, die Durchbrechungen 19 a, 20 a sowie den Kanal 12 b miteinander verbunden sind und einen Kanal 35 für beispielsweise den Probengasstrom bilden. Die Kanäle 31 b, 32 b sind über die Kanäle 29 b, 30 b, die Durchbrechungen 19 b, 20 b sowie den Kanal 12 c miteinander verbunden und bilden einen Kanal 36 für beispielsweise den Trägergasstrom. Bei Betätigung des Injektors 1 wird die Platte 6 relativ zu der Platte 7 verschoben (Fig. 5 rechts). In dieser zweiten Stellung verbindet der Kanal 12 a nunmehr die Kanäle 31 a, 32 a, 29 a, 30 a und die Durchbrechungen 19 a, 20 a, während der Kanal 12 b die Kanäle 31 b, 32 b, 29 b, 30 b und die Durchbrechungen 19 b, 20 b verbindet. Das Probengasvolumen im Kanal 12 b gelangt auf diese Weise in den Trägergaskanal 36 und wird mit dem dortigen Trägergasstrom auf die Trennsäule 2 transportiert. Das Probenvolumen kann durch entsprechende Dimensionierung der Kanäle 12 bestimmt werden. Nach Rückstellung des Injektors 1 in die Ruhestellung kann erneut ein Meßzyklus beginnen. Es können auch weitere Kanäle, etwa weitere Probengaskanäle 35 oder ein Referenzgaskanal, vorgesehen sein, um beispielsweise auch bei Rückstellung des Injektors 1 Probengas in den Trägergasstrom injizieren zu können oder um Mehrfachmessungen auch verschiedener Proben zu ermöglichen.

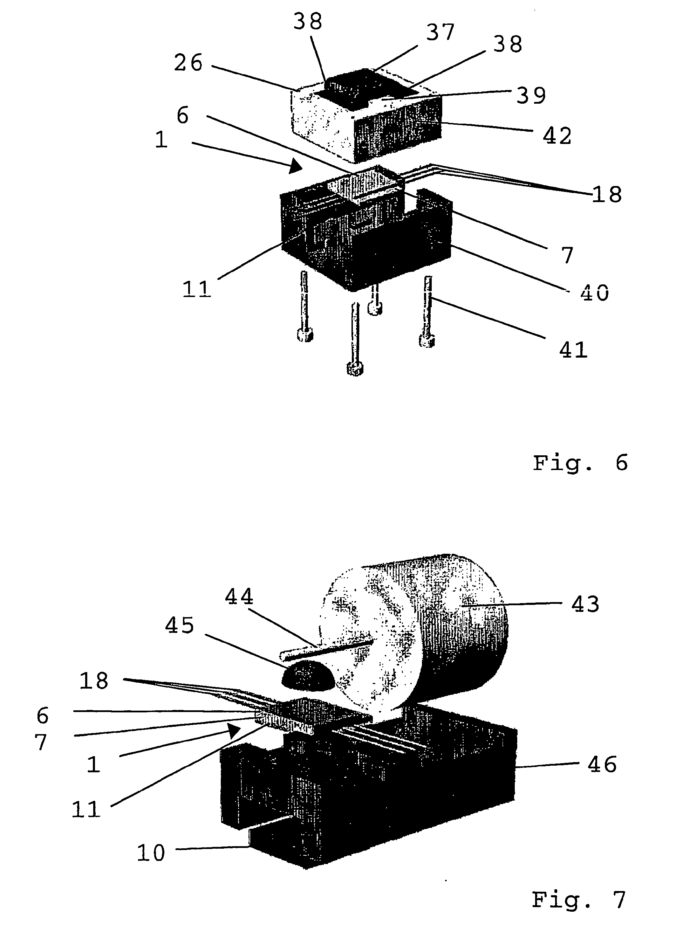

Die Fig. 6 und 7 zeigen einen Injektor 1 gemäß den Figuren 3 bis 5 mit einem elektromechanischen Antrieb 17 als Linearmotor in Mikrosystemtechnik (Fig. 6) bzw. als bistabiles Magnetsystem (Fig. 7). Der Linearmotor 17 weist eine Spule 37 sowie Permanentmagneten 38 auf. Die Spule ist beweglich auf einer Achse 39 gelagert, die von einem Gehäuseteil 42 (magnetisches Joch) gebildet wird. Der Linearmotor 17 kann unmittelbar mit seiner Spule auf der Platte 6 befestigt oder mittels einer Adaptervorrichtung mechanisch angebunden werden. Wenn Strom durch die Spule 37 geschickt wird, bewegt sich diese entlang der Achse 39 und verschiebt die Platte 6 relativ zu der Platte 7 (vergl. Fig. 5). Der Injektor 1 befindet sich mit dem Linearmotor 17 in einem Gehäuseteil 40. Mit Hilfe von Schrauben 41 und Bohrungen 26 wird das Gehäuseteil 42 mit dem Gehäuseteil 40 fest verbunden. Die Platte 7 mit der Abdeckplatte 11 wird dabei in dem Gehäuseteil 40 fixiert. Die Platte 6 wird bei dieser Konstruktion auf die Platte 7 gepreßt, um für eine ausreichende Dichtigkeit zu sorgen. Durch die Beschichtung mit einer Schicht 8 aus Kunststoff kann die Platte 6 an der Platte 7 vorbeigleiten, ohne daß hierzu eine hohe Antriebskraft erforderlich wäre. Die von dem Linearmotor 17 gelieferte Antriebskraft in einer Größenordnung von etwa 0,2 bis 1 N reicht aus, um die Relativbewegung der Platte 6 zu bewerkstelligen. Die Gehäuseteile 42, 40 können durch selektives Laser-Sintern hergestellt sein. Dabei versintert bzw. verschmilzt ein Laser Materialkörnchen eines partikulären Ausgangsmaterials. Neben Metallen und keramischen Substanzen können auch Kunststoffe verwendet werden. Der Linearmotor 17 weist auch den Vorteil auf, daß er aus vergleichsweise wenigen (fünf) Einzelteilen zusammengesetzt ist.

Der in Fig. 7 dargestellte elektromechanische Antrieb 17 in Form eines bistabilen Magnetsystems weist einen Antrieb 43 und eine Achse 44 auf, die mit der Platte 6 fest verbunden ist. Hierzu kann beispielsweise eine Klebverbindung 45 ausreichen. Bei Betätigung des Injektors 1 bewegt sich die Achse 44 zurück und nimmt die Platte 6 mit. Sowohl der Antrieb 43 als auch der Injektor 1 sind in einem Gehäuse 46 untergebracht. Hier sorgen Klemmvorrichtungen für ein Aufeinanderpressen der Platten 6, 7. Auf der Unterseite des Gehäuses 46 kann eine Ausnehmung für ein Heizelement 10 vorgesehen sein. Das bistabile Magnetsystem 17 ist etwas komplexer aufgebaut als der oben beschriebene Linearmotor. Es ist aus insgesamt zehn Einzelteilen zusammengesetzt. Die Anbindung an den Injektor gestaltet sich jedoch einfacher als bei dem Linearmotor. Darüber hinaus ist die erzielbare Antriebskraft mit etwa 10 N wesentlicher größer als beim Linearmotor.

Bezugszeichenliste:
1. Injektor
2. Trennsäule
3. Detektor
4. Platine
5. Gaschromatographie(GC)-Modul
6. Platte
7. Platte
8. Schicht aus inertem Kunststoff
9. elektronische Steuerungs- und Auswerteeinheit
10.Heizelemente
11.Glasplatte
12.Kanal
13.zuführender Kanal
14.abführender Kanal .
15. Ausnehmung
16.Ausnehmung
17. elektromechanischer Antrieb
18.Kapillare
19.Durchbrechung
20.Durchbrechung
21.Gasverteilerblock
22.Kapillare
23.Ausnehmung
24.Ausnehmung
25.Schnittstelle
26. Bohrungen
27.Endbereich
28.Endbereich
29. Kanal
30. Kanal
31. Kanal
32. Kanal
33. Vorsprung
34. Vorsprung
35. Kanal (Probengas)
36. Kanal (Trägergas)
37. Spule
38.Permanentmagnet
39. Achse
40.Gehäuseteil
41. Schrauben
42.Gehäuseteil
43.Antrieb
44.Achse
45.Verbindung
46.Gehäuse
47.Auflagefläche

## Patentansprüche

1. Miniaturisierter Gaschromatograph mit mindestens einem Injektor (1), einer Trennsäule (2) und einem Detektor (3), wobei Injektor (1), Trennsäule (2) und Detektor (3) auf einer Platine (4) zu einem Gaschromatographie-Modul (5) zusammengefaßt sind, und der Injektor (1) eine erste Platte (6) mit Kanälen (12) aufweist, die einer zweiten Platte (7) mit Kanälen (13) zugeordnet und relativ zu dieser verschiebbar ist, und wobei mindestens eine der Platten (6, 7) auf der der anderen Platte (7, 6) zugewandten Seite mit einer Schicht (8) aus einem Kunststoff versehen ist.

2. Miniaturisierter Gaschromatograph nach Anspruch 1, **dadurch gekennzeichnet, daß** der Kunststoff chemisch inert ist.

3. Miniaturisierter Gaschromatograph nach Anspruch 1 oder 2, **dadurch gekennzeichnet, daß** die Schicht (8) durch Plasmapolymerisation organischer Monomere aufgebracht ist.

4. Miniaturisierter Gaschromatograph nach Anspruch 3, **dadurch gekennzeichnet, daß** die organischen Monomere Difluormethan, Hexafluorbutadien und/oder Octafluorcyclobutan sind.

5. Miniaturisierter Gaschromatograph nach einem der vorhergehenden Ansprüche, **dadurch gekennzeichnet, daß** die Platten (6, 7) aus Silizium sind.

6. Miniaturisierter Gaschromatograph nach einem der vorhergehenden Ansprüche, **dadurch gekennzeichnet, daß** der Kunststoff einen niedrigeren Haftreibungskoeffizienten als Silizium aufweist.

7. Miniaturisierter Gaschromatograph nach einem der vorhergehenden Ansprüche, **dadurch gekennzeichnet, daß** auf der Platine (4) zusätzlich eine elektronische Steuerungs- und Auswerteeinheit (9) vorgesehen ist.

8. Miniaturisierter Gaschromatograph nach einem der vorhergehenden Ansprüche, **dadurch gekennzeichnet, daß** der Injektor (1) und/oder die Trennsäule (2) und/oder der Detektor (3) mit Hilfe von Heizelementen (10) temperierbar sind.

9. Miniaturisierter Gaschromatograph nach Anspruch 8, **dadurch gekennzeichnet, daß** die Heizelemente (10) Keramikplatten mit Dickschicht-Heizelementen sind.

10. Miniaturisierter Gaschromatograph nach Anspruch 8 oder 9, **dadurch gekennzeichnet, daß** zum Schutz der elektronischen Steuerungs- und Auswerteeinheit (9) vor der Wärmeabstrahlung der Heizelemente (10) Ausnehmungen (15, 23, 24) in der Platine (4) vorgesehen sind.

11. Miniaturisierter Gaschromatograph nach einem der vorhergehenden Ansprüche, **dadurch gekennzeichnet, daß** die Platte (7) von einer Abdeckplatte (11), bevorzugt einer Borosilikatglasplatte, abgedeckt ist.

12. Miniaturisierter Gaschromatograph nach einem der vorhergehenden Ansprüche, **dadurch gekennzeichnet, daß** die erste Platte (6) mindestens drei Kanäle (12), die zweite Platte (7) mindestens zwei zuführende Kanäle (13) und zwei abführende Kanäle (14) aufweist.

13. Miniaturisierter Gaschromatograph nach einem der vorhergehenden Ansprüche, **dadurch gekennzeichnet, daß** in der Platine Ausnehmungen (16) vorgesehen sind, in die Kapillaren (18), bevorzugt Glaskapillaren, zur Gasführung versenkt sind.

14. Miniaturisierter Gaschromatograph nach einem der vorhergehenden Ansprüche, **dadurch gekennzeichnet, daß** dem Detektor (3), der bevorzugt ein Wärmeleitfähigkeitsdetektor ist, ein Gasflußsensor zugeordnet ist, dessen Signale eine Basislinienkorrektur erlauben.

15. Injektor in Mikrosystemtechnik, insbesondere für einen miniaturisierten Gaschromatographen, **dadurch gekennzeichnet, daß** der Injektor (1) eine erste Platte (6) mit Kanälen (12) aufweist, die einer zweiten Platte (7) mit Kanälen (13) zugeordnet und relativ zu dieser verschiebbar ist, und wobei mindestens eine der Platten (6, 7) auf der der anderen Platte (6, 7) zugewandten Seite mit einer Schicht (8) aus einem Kunststoff versehen ist.

16. Injektor nach Anspruch 15, **dadurch gekennzeichnet, daß** der Kunststoff chemisch inert ist.

17. Injektor nach Anspruch 15 oder 16, **dadurch gekennzeichnet, daß** die Schicht (8) durch Plasmapolymerisation organischer Monomere aufgebracht ist.

18. Injektor nach Anspruch 17, **dadurch gekennzeichnet, daß** die organischen Monomere Difluormethan, Hexafluorbutadien und/oder Octafluorcyclobutan sind.

19. Injektor nach einem der Ansprüche 15 bis 18, **dadurch gekennzeichnet, daß** der Kunststoff einen niedrigeren Haftreibungskoeffizienten aufweist als Silizium.

20. Injektor nach einem der Ansprüche 15 bis 19, **dadurch gekennzeichnet, daß** die Platte (7) von einer Abdeckplatte (11), bevorzugt einer Borosilikatglasplatte, abgedeckt ist.

## Claims

1. Miniaturised gas chromatograph, comprising at least one injector (1), a separation column (2) and a detector (3), the injector (1), separation column (2) and detector (3) being combined on a circuit board (4) to form a gas chromatography module (5), the injector (1) comprising a first plate (6) with channels (12) which is associated with a second plate (7) with channels (13) and is displaceable relative thereto, and at least one of the plates (6, 7) being provided with a layer (8) of a plastics material on the side facing towards the other plate (7, 6).

2. Miniaturised gas chromatograph according to claim 1, **characterised in that** the plastics material is chemically inert.

3. Miniaturised gas chromatograph according to claim 1 or 2, **characterised in that** the layer (8) is applied by plasma polymerisation of organic monomers.

4. Miniaturised gas chromatograph according to claim 3, **characterised in that** the organic monomers are difluoromethane, hexafluorobutadiene and/or octofluorocyclobutane.

5. Miniaturised gas chromatograph according to any one of the preceding claims, **characterised in that** the plates (6, 7) are made of silicon.

6. Miniaturised gas chromatograph according to any one of the preceding claims, **characterised in that** the plastics material has a lower coefficient of static friction than silicon.

7. Miniaturised gas chromatograph according to any one of the preceding claims, **characterised in that** an electronic control and evaluation unit (9) is additionally provided on the circuit board (4).

8. Miniaturised gas chromatograph according to any one of the preceding claims, **characterised in that** the injector (1) and/or the separation column (2) and/or the detector (3) can be temperature-regulated by means of heating elements (10).

9. Miniaturised gas chromatograph according to claim 8, **characterised in that** the heating elements (10) are ceramic plates with thick-film heating elements.

10. Miniaturised gas chromatograph according to claim 8 or 9, **characterised in that** recesses (15, 23, 24) are provided in the circuit board (4) for protection of the electronic control and evaluation unit (9) from the thermal radiation of the heating elements (10).

11. Miniaturised gas chromatograph according to any one of the preceding claims, **characterised in that** the plate (7) is covered by a cover plate (11), preferably a borosilicate glass plate.

12. Miniaturised gas chromatograph according to any one of the preceding claims, **characterised in that** the first plate (6) has at least three channels (12) and the second plate (7) has at least two supply channels (13) and two discharge channels (14).

13. Miniaturised gas chromatograph according to any one of the preceding claims, **characterised in that** recesses (16) are provided in the circuit board, in which recesses (16) capillaries (18), preferably glass capillaries, for conducting gas are accommodated.

14. Miniaturised gas chromatograph according to any one of the preceding claims, **characterised in that** a gas flow sensor, the signals of which permit a baseline correction, is associated with the detector (3), which is preferably a thermal-conductivity detector.

15. Injector produced using microsystems technology, in particular for a miniaturised gas chromatograph, **characterised in that** the injector (1) comprises a first plate (6) with channels (12) which is associated with a second plate (7) with channels (13) and is displaceable relative thereto, at least one of the plates (6, 7) being provided with a layer (8) of a plastics material on the side facing towards the other plate (6, 7).

16. Injector according to claim 15, **characterised in that** the plastics material is chemically inert.

17. Injector according to claim 15 or 16, **characterised in that** the layer (8) is applied by plasma polymerisation of organic monomers.

18. Injector according to claim 17, **characterised in that** the organic monomers are difluoromethane, hexafluorobutadiene and/or octofluorocyclobutane.

19. Injector according to any one of claims 15 to 18, **characterised in that** the plastics material has a lower coefficient of static friction than silicon.

20. Injector according to any one of claims 15 to 19, **characterised in that** the plate (7) is covered by a cover plate (11), preferably a borosilicate glass plate.

## Revendications

1. Chromatographe en phase gazeuse miniaturisé, comprenant au moins un injecteur (1), une colonne à fractionner (2) et un détecteur (3), l'injecteur (1), la colonne à fractionner (2) et le détecteur (3) étant regroupés sur une platine (4) en un module de chromatographie en phase gazeuse (5), et l'injecteur (1) présentant une première plaque (6) avec des canaux (12) qui est attribuée à une deuxième plaque (7) avec des canaux (13) et est mobile par rapport à celle-ci, et dans lequel au moins l'une des plaques (6, 7) est munie du côté tourné vers l'autre plaque (7, 6) d'une couche (8) en matière synthétique.

2. Chromatographe en phase gazeuse miniaturisé selon la revendication 1, **caractérisé en ce que** la matière synthétique est chimiquement inerte.

3. Chromatographe en phase gazeuse miniaturisé selon la revendication 1 ou 2, **caractérisé en ce que** la couche (8) est appliquée par polymérisation de plasma de monomères organiques.

4. Chromatographe en phase gazeuse miniaturisé selon la revendication 3, **caractérisé en ce que** les monomères organiques sont le difluorométhane, le hexafluorobutadiène et/ou l'octafluorocyclobutane.

5. Chromatographe en phase gazeuse miniaturisé selon l'une quelconque des revendications précédentes, **caractérisé en ce que** les plaques (6, 7) sont en silicium.

6. Chromatographe en phase gazeuse miniaturisé selon l'une quelconque des revendications précédentes, **caractérisé en ce que** la matière synthétique présente un coefficient d'adhérence inférieur à celui du silicium.

7. Chromatographe en phase gazeuse miniaturisé selon l'une quelconque des revendications précédentes, **caractérisé en ce que** sur la platine (4), une unité électronique de commande et d'analyse (9) est prévue en plus.

8. Chromatographe en phase gazeuse miniaturisé selon l'une quelconque des revendications précédentes, **caractérisé en ce que** l'injecteur (1) et/ou la colonne à fractionner (2) et/ou le détecteur (3) peuvent être tempérés à l'aide d'éléments chauffants (10).

9. Chromatographe en phase gazeuse miniaturisé selon la revendication 8, **caractérisé en ce que** les éléments chauffants (10) sont des plaques céramiques avec des éléments chauffants sur couche épaisse.

10. Chromatographe en phase gazeuse miniaturisé selon la revendication 8 ou 9, **caractérisé en ce que** pour protéger l'unité électronique de commande et d'analyse (9) contre la dissipation thermique des éléments chauffants (10), des évidements (15, 23, 24) sont prévus dans la platine (4).

11. Chromatographe en phase gazeuse miniaturisé selon l'une quelconque des revendications précédentes, **caractérisé en ce que** la plaque (7) est recouverte par une plaque de couverture (11), de préférence une plaque en verre borosilicaté.

12. Chromatographe en phase gazeuse miniaturisé selon l'une quelconque des revendications précédentes, **caractérisé en ce que** la première plaque (6) présente au moins trois canaux (12), la deuxième plaque (7) présente au moins deux canaux d'amenée (13) et deux canaux d'évacuation (14).

13. Chromatographe en phase gazeuse miniaturisé selon l'une quelconque des revendications précédentes, **caractérisé en ce que** dans la platine, des évidements (16) sont prévus dans lesquels des capillaires (18), de préférence des capillaires de verre, sont encastrés pour conduire un gaz.

14. Chromatographe en phase gazeuse miniaturisé selon l'une quelconque des revendications précédentes, **caractérisé en ce que** le détecteur (3), qui est de préférence un détecteur de conductibilité thermique, se voit attribuer un capteur de débit de gaz dont les signaux permettent une correction de ligne de base.

15. Injecteur en technique de microsystème, en particulier pour un chromatographe en phase gazeuse miniaturisé, **caractérisé en ce que** l'injecteur (1) présente une première plaque (6) avec des canaux (12) qui est attribuée à une deuxième plaque (7) avec des canaux (13) et est mobile par rapport à celle-ci, et dans lequel au moins l'une des plaques (6, 7) est munie du côté tourné vers l'autre plaque (6, 7) d'une couche (8) en matière synthétique.

16. Injecteur selon la revendication 15, **caractérisé en ce que** la matière synthétique est chimiquement inerte.

17. Injecteur selon la revendication 15 ou 16, **caractérisé en ce que** la couche (8) est appliquée par polymérisation de plasma de monomères organiques.

18. Injecteur selon la revendication 17, **caractérisé en ce que** les monomères organiques sont le difluorométhane, le hexafluorobutadiène et/ou l'octafluorocyclobutane.

19. Injecteur selon l'une quelconque des revendications 15 à 18, **caractérisé en ce que** la matière synthétique présente un coefficient d'adhérence inférieur à celui du silicium.

20. Injecteur selon l'une quelconque des revendications 15 à 19, **caractérisé en ce que** la plaque (7) est recouverte par une plaque de couverture (11), de préférence une plaque en verre borosilicaté.
